## Europäisches Patentamt
## European Patent Office
## Office européen des brevets

(11) Veröffentlichungsnummer : **0 155 450**
**B1**

# EUROPÄISCHE PATENTSCHRIFT

(45) Veröffentlichungstag der Patentschrift :
30.09.87

(51) Int. Cl.⁴ : **C 08 F220/12**, C 08 F 2/26

(21) Anmeldenummer : 85100438.2

(22) Anmeldetag : 17.01.85

(54) Acrylathydrosole.

(30) Priorität : 25.01.84 DE 3402447

(43) Veröffentlichungstag der Anmeldung :
25.09.85 Patentblatt 85/39

(45) Bekanntmachung des Hinweises auf die Patenterteilung : 30.09.87 Patentblatt 87/40

(84) Benannte Vertragsstaaten :
AT BE CH DE FR GB IT LI NL SE

(56) Entgegenhaltungen :
EP-A- 0 026 932
DE-A- 2 015 660

(73) Patentinhaber : Henkel Kommanditgesellschaft auf
Aktien
Postfach 1100 Henkelstrasse 67
D-4000 Düsseldorf-Holthausen (DE)

(72) Erfinder : Höfer, Rainer, Dr.
Klever Strasse 31
D-4000 Düsseldorf 30 (DE)
Erfinder : Schmid, Karl-Heinz, Dr.
Stifterstrasse 10
D-4020 Mettmann (DE)
Erfinder : Ackermann, Karl-Heinz
Elisabethstrasse 117
D-4000 Düsseldorf 1 (DE)

0 155 450

**Beschreibung**

Die Erfindung betrifft ein Verfahren zur Herstellung von Hydrosolen auf Basis von Acrylsäureestern. Unter Hydrosolen werden Polymerdispersionen mit besonders geringer Teilchengröße — etwa im Bereich von 0,08 μm und darunter — verstanden.

Hydrosole auf Acrylatbasis sind bereits seit längerer Zeit bekannt. Ihre Verwendung erfolgt vorwiegend in der Anstrichtechnik als Grundierungen zur Imprägnierung poröser Untergründe ( .J. L. Mondt, J. Oil Col. Assoc. 60, 398 (1977) und H. P. Beardsley, R. N. J. Selby, Paint Technol. 40, 263 (1968)).

Die Herstellung von Hydrosolen auf Reinacrylat-Basis wird beispielsweise in BP 11 14 133 und BP 11 09 656 beschrieben. Die dort beschriebenen Emulsions-Polymerisate, hergestellt mit Maisstärke oder Fettalkoholsulfat als Emulgiermittel, müssen jedoch zur Erzielung der Hydrosol-Teilchenfeinheit mit einem in seiner Funktion nicht weiter definierten « Verkleinerungsmittel » (Comminution agent) versetzt werden.

Zur Herstellung derartiger Hydrosole wurde bereits vorgeschlagen, als Emulgatoren eine Kombination von Fettalkoholsulfaten mit Fettalkohol- und/oder Alkylphenolethersulfaten einzusetzen. Nach einem derartigen Verfahren hergestellte Hydrosole sind zwar stabil und für manche Anwendungen brauchbar, doch steigt ihre Viskosität rasch an, wenn ein Feststoffgehalt über 40 Gewichtsprozent eingestellt wird. Für Anwendungen in der Anstrichtechnik werden jedoch insbesondere dünnflüssige höher konzentrierte Produkte gefordert.

Es ist somit Aufgabe der Erfindung, ein Verfahren zur Herstellung dünnflüssiger Hydrosole auf Acrylatbasis zu beschreiben und die Verwendbarkeit von α-Sulfocarbonsäureestern, insbesondere α-Sulfofettsäureestern in einem derartigen Verfahren aufzuzeigen.

Gegenstand der Erfindung ist somit ein Verfahren zur Herstellung von Acrylat-Hydrosolen durch Polymerisation von

30 bis 99 Gewichtsprozent (Meth)acrylsäureestern von $C_1$ bis $C_8$ Alkoholen

0,5 bis 7 Gewichtsprozent ethylenisch ungesättigten Säuren und/oder deren Amiden und

0 bis 70 Gewichtsprozent Monomeren aus der Gruppe Styrol, Methylstyrol, Acrylnitril, Vinylacetat, und/oder Vinylchlorid

in wäßriger Emulsion in Gegenwart von üblichen radikalischen Initiatoren, Reglern, sonstigen Hilfsstoffen und Alkylphenolethersulfaten als Emulgatoren,
dadurch gekennzeichnet, daß als Co-Emulgator ein α-Sulfocarbonsäurealkylester mit bis 24 C-Atomen im Carbonsäureteil und 1 bis 4 C-Atomen im Alkoholrest und seine α-Sulfocarbonsäure, beide gewünschtenfalls in Salzform, eingesetzt werden.

α-Sulfocarbonsäuren sind als Polymerisationsemulgatoren bereits bekannt. So wird ihre Verwendung bei der Emulsionspolymerisation in den folgenden Druckschriften beschrieben :
DE 17 20 430, 17 70 217, 17 70 223, 19 01 493, 19 01 495, 19 18 414, 19 19 705, 20 15 660, 20 54 103, sowie 33 39 407.

Zu erwähnen sind weiterhin die GB-PS 745,927 und US-PS 2,694,052.

All diesen Druckschriften ist die spezielle Eignung von α-Sulfocarbonsäureestern zur Herstellung hochfeinteiliger niederviskoser Acrylatdispersionen (Hydrosole) nicht zu entnehmen.

Die Herstellung von α-Sulfocarbonsäureestern ist in der deutschen Auslegeschrift 11 86 051 sowie in der deutschen Patentschrift 12 48 645 oder der deutschen Offenlegungsschrift 30 47 897 beschrieben. Ein Verfahren zur Herstellung von α-Sulfofettsäureestersalzen schließlich ist in der deutschen Patentschrift 25 44 846 angegeben. Danach geht man von einer Mischung aus 100 Gewichtsteilen eines Alkylesters einer gesättigten Fettsäure, der einen Fettsäurerest mit 8 bis 22 Kohlenstoffatomen und einen Alkoholrest mit 1 bis 6 Kohlenstoffatomen aufweist aus, versetzt mit 0,5 bis 10 Gewichtsprozent eines anorganischen Sulfats in Form seines kristallwasserfreien Pulvers und gibt 1 bis 2 mol $SO_3$ pro mol Fettsäureester gasförmig in Mischung mit einem Inertgas bei Temperaturen bis zu maximal 100 °C zu. Salze von α-Sulfofettsäureestern, die als hochkonzentrierte Lösungen in Wasser konfektionierbar sind und höchstens untergeordnete Mengen an freien Säuren enthalten, sind nach einem Verfahren der deutschen Offenlegungsschrift 31 23 681 herstellbar. Es wird dort die Nachveresterung des sulfonierten Produktes durch Zugabe von Alkohol vor der Neutralisation beschrieben.

Die Herstellung von α-Sulfocarbonsäuren wird in der US-Patentschrift 2,460,968 beschrieben. Danach werden aliphatische Säuren mit mindestens 6 Kohlenstoffatomen mit Chlorsulfonsäure in einem Lösungsmittel sulfoniert, wobei ein leichter Überschuß an Chlorsulfonsäure eingesetzt wird und entstehende Gase (HCl) sowie das Lösungsmittel anschließend durch Destillation entfernt werden.

Die erfindungsgemäß zu verwendenden α-Sulfocarbonsäureester, beziehungsweise deren Mischungen mit den freien Säuren können nach den angegebenen Verfahren aus beliebigen langkettigen Carbonsäuren mit 8 bis 24, vorzugsweise 12-18 C-Atomen hergestellt werden. Bevorzugt sind jedoch α-Sulfoester und Säuren auf Basis von natürlich vorkommenden Fettsäuren, insbesondere gesättigten Fettsäuren. So können die Bestandteile des Mischemulgators aus reinen geradkettigen $C_8$, $C_{10}$, $C_{12}$, $C_{14}$, $C_{16}$, $C_{18}$, $C_{20}$ oder $C_{24}$-Carbonsäuren hergestellt werden. Besonders bevorzugt ist es jedoch, die

2

Komponente des Mischemulgators aus gesättigten Estern natürlich vorkommender Fettsäuren herzustellen. Besonders geeignete Rohstoffe sind hydrierte Kokosfettsäure oder hydrierte Talgfettsäure. Dabei kann die hydrierte Kokosölfettsäure auch durch hydrierte Palmkernölfettsäure ersetzt werden. Die hydrierten Fettsäuren können als solche oder in fraktionierter Form eingesetzt werden. Sollen α-Sulfofettsäuren beziehungsweise deren Ester mit 18 bis 22 Kohlenstoffatomen hergestellt werden, so wird vorzugsweise von dem Härtungsprodukt eines erucasäurereichen Rüböls ausgegangen.

Weiterhin können die erfindungsgemäß eingesetzten α-Sulfocarbonsäuren auch auf Basis synthetischer Carbonsäuren mit 8 bis 24 C-Atomen, insbesondere auf Basis unverzweigter synthetischer Carbonsäuren hergestellt werden.

Das erfindungsgemäße Verfahren kann unter Verwendung einer α-Sulfocarbonsäure und ihres Esters durchgeführt werden. Um Hydrosole zu erhalten, die besonders geringe Viskosität aufweisen, ist es zweckmäßig, Gemische aus α-Sulfocarbonsäuren und ihren Estern einzusetzen. Derartige Mischemulgatoren können durch Vermischen von α-Sulfocarbonsäureestern mit α-Sulfocarbonsäuren hergestellt werden. Es ist jedoch bevorzugt, von α-Sulfocarbonsäureestern auszugehen und durch Hydrolyse der Esterfunktion sich den gewünschten Anteil an freien Säuren in situ herzustellen. Dabei kann die Hydrolyse vor oder bei der Neutralisation erfolgen. Der Hydrolysegrad läßt sich durch verbrauchte Alkalimengen und/oder durch Titration freier Carbonsäuregruppen oder auf spektroskopischem Wege ermitteln.

Erfindungsgemäß werden vorzugsweise Mischemulgatoren aus 99,9 bis 70 Gewichtsteilen eines Sulfocarbonsäurealkylesters und 0,1 bis 30 Gewichtsteilen einer α-Sulfocarbonsäure eingesetzt. Bevorzugt sind Mischungen aus 99,5 bis 80 Gewichtsteilen eines α-Sulfocarbonsäurealkylesters und 0,5 bis 20 Gewichtsteilen einer entsprechenden α-Sulfocarbonsäure. Dabei sollen die Produkte im Carbonsäureteil vorzugsweise 12 bis 18 C-Atome aufweisen. Weitere im erfindungsgemäßen Verfahren geeignete Produkte sind α-Sulfofettsäuren und deren Mischungen mit α-Sulfofettsäureestern, bei denen der Gehalt an freien Säuren über 30 Gewichtsprozent liegt.

Das erfindungsgemäße Verfahren verwendet α-Sulfocarbonsäureester mit einem bis 4 C-Atomen in der Alkoholfunktion des Esters. Geeignete Ester sind Methyl-, Ethyl-, Propyl-, Isopropyl- und Butylester, aber auch Ester oder Partialester des Ethylenglykols, Propylenglykols, Glycerins oder Trimethylolpropans. Bevorzugt sind die Butyl-, Ethyl- und Methylester.

Um Acrylatdispersionen der gewünschten Feinheit — also Hydrosole — zu erhalten, werden die α-Sulfocarbonsäuren und/oder ihre Ester zusammen mit 0,5 bis 4, vorzugsweise 1 bis 3 Gewichtsprozent Alkylphenolethersulfaten eingesetzt. Geeignete Alkylphenolethersulfate sind Schwefelsäurehalbester der Umsetzungsprodukte von Octyl- und/oder Nonylphenol mit 4 bis 30, vorzugsweise 8 bis 12 mol Ethylenoxid pro mol Phenol.

Nach dem erfindungsgemäßen Verfahren werden die Emulgatoren vorzugsweise in der Gesamtwassermenge gelöst. Dabei können sowohl die freien Säuren verwendet werden, als auch Salze zum Beispiel Alkalisalze wie Natrium-, Kalium-, Lithiumsalze, Erdalkalisalze wie Magnesiumsalze oder Ammonium- oder Aminsalze. So können Triethylaminsalze, Tetramethylammoniumsalze und insbesondere Alkanolaminsalze beispielsweise Dimethylethanolaminsalze oder Triethanolaminsalze eingesetzt werden. Verwendbar sind weiter die Salze von Trishydroxymethylenmethylamin oder von 2-Methyl-2-aminopropanol beziehungsweise-propandiol.

Erfindungsgemäß werden die α-Sulfocarbonsäure-ester in Mischung mit den unveresterten Säuren in Mengen von 1 bis 7, vorzugsweise 1,5 bis 5 Gewichtsprozent auf Gesamtdispersion eingesetzt. Dabei richtet sich die Emulgatormenge auch nach dem Gesamtfeststoffgehalt, das heißt bei höheren Feststoffgehalten werden im Bereich der angegebenen Schranken höhere Emulgatormengen verwendet. Die Feststoffgehalte der Hydrosole, gemessen als Trockensubstanz, betragen 30 bis über 45 Gew.-%. Bevorzugt sind Trockensubstanzgehalte von über 40 Gew.-%.

Nach dem erfindungsgemäßen Verfahren kann eine Vielzahl von im wesentlichen wasserunlöslichen Acrylatmonomeren zu Hydrosolen verarbeitet werden. So ist das Verfahren geeignet für die Emulsionspolymerisation von Methyl-, Ethyl-, Isopropyl-, Propyl-, n-Butyl- und/oder 2-Ethylhexylestern der Acrylsäure und/oder Methacrylsäure oder deren Mischungen. Dabei ist es lediglich erforderlich, daß eine ethylenisch ungesättigte Säure in Mengen von 0,5-7 Gew.-%, bezogen auf Gesamtmonomere mitverwendet wird. Geeignete ungesättigte Säuren sind monofunktionelle und/oder difunktionelle ungesättigte Carbonsäuren oder Monoester der Schwefelsäure sowie Sulfonsäuren. Besonders geeignet sind Acrylsäure, Methacrylsäure, Crotonsäure, Itaconsäure, Maleinsäure Fumarsäure, die Halbester der genannten Dicarbonsäuren mit $C_1$-$C_5$-Alkoholen, Vinylsulfonsäure, 2-Acrylamido-2-methylpropansulfonsäure sowie Schwefelsäuremonoester des 2-Hydroxyethyl-(meth)-acrylats. Bevorzugt ist die Verwendung von 1 bis zu 3 Gew.-% der ungesättigten Säuren. Nach einer weiteren Ausführungsform der Erfindung können die ungesättigten Säuren ganz oder zum Teil durch ihre Amide, beispielsweise durch Acrylamid oder Methacrylamid ersetzt werden.

Zur Herstellung der Hydrosole nach dem erfindungsgemässen Verfahren können weitere wasserunlösliche Monomere mit herangezogen werden. So können z. B. Styrol, α-Methylstyrol, Acrylnitril, Vinylacetat, Vinylester von Carbonsäuren, Vinylchlorid und/oder Vinylidenchlorid in Mengen bis zu 70 Gew.-%, bezogen auf Gesamtmonomere, mitverwendet werden.

Erfindungsgemäß können auch weitere übliche Polymerisationshilfsstoffe mitverwendet werden.

**0 155 450**

Hier sind in erster Linie die Initiatoren zu nennen. Verwendet werden können anorganische Peroxidverbindungen wie zum Beispiel Kalium- oder Ammoniumpersulfat oder Wasserstoffperoxid. Weiterhin können organische Peroxidverbindungen oder organische Azoverbindungen, soweit sie für die Emulsionspolymerisation geeignet sind, verwendet werden. Die Initiatoren werden in üblichen Mengen d. h. von 0,05 bis 2 Gewichtsprozent, vorzugsweise von 0,1 bis 0,5 Gewichtsprozent eingesetzt. Als weitere Hilfsstoffe seien Puffersubstanzen wie Natriumhydrogencarbonat, Natriumpyrophosphat oder Natriumacetat, die in Mengen bis zu 2 Gewichtsprozent eingesetzt werden können, genannt. Auch Beschleuniger wie Formaldehydsulfoxylat können verwendet werden. Weiterhin können die üblicherweise bei der Emulsionspolymerisation verwendeten Molekulargewichtsregler zum Beispiel Butenol oder auch organische Thioverbindungen wie Mercaptoethanol, Thioglykolsäure, Octylmercaptan oder tert. Dodecylmercaptan verwendet werden.

Für die Durchführung des erfindungsgemäßen Verfahrens kommen verschiedene bei der Emulsionspolymerisation üblicherweise angewandte Verfahrensweisen in Betracht. Bevorzugt ist jedoch eine üblicherweise als Monomerenzulauf bekannte Vorgehensweise, bei der Wasser und Emulgatoren vorgelegt werden und die Monomeren während des Polymerisationsverlaufs einzeln oder in Mischung zugegeben werden. Ein weiteres mögliches Herstellverfahren ist das Emulsionszulaufverfahren oder das Gesamtvorlageverfahren.

Im allgemeinen wird dazu die Temperatur des Polymerisationsmediums in einem Bereich von 40 bis 100 °C, vorzugsweise 50 bis 90 °C, gehalten. Als pH-Wert wird zweckmäßigerweise ein Bereich zwischen 3 und 9 eingehalten.

Das erfindungsgemäße Verfahren wird zweckmäßigerweise in kühl- und heizbaren, mit Rührer und Temperaturmessung versehenen Behältern, beispielsweise in Rührdruckkesseln, durchgeführt. Die Verwendung von Rohrschlangen-Reaktoren oder sogenannten Loop-Reaktoren ist jedoch ebenfalls möglich.

Nach Beendigung der Polymerisation wird die Polymerisatdispersion zweckmäßigerweise abgekühlt und über Siebeinrichtungen aus dem Kessel gelassen. Soll das Festprodukt isoliert werden, dann wird die Polymerisatdispersion zweckmäßigerweise ausgefällt oder sprühgetrocknet. Bevorzugt ist jedoch eine direkte Verwendung der Dispersionen als Bindemittel für Farben, Klebstoffe und andere Beschichtungszwecke.

Beispiele

Verwendete Emulgatoren :

a) $\alpha$-Sulfo-$C_{12}$/$C_{18}$-fettsäuremethylester, Na-Salz 36,9 Gew.-%ige AS, < 0,1 % « Di-Salz » der unveresterten Säure

b) i-Nonylphenol + 9-10 EO[1)]-sulfat, Na-Salz 33 Gew.-%ig in Wasser

c) $\alpha$-Sulfo-$C_{16}$/$C_{18}$-fettsäuremethylester, Na-Salz enthaltend 3,3 % « Di-Salz » der unveresterten Säure, 28 Gew.-%ig in Wasser

d) $\alpha$-Sulfo-$C_{16}$/$C_{18}$-fettsäuremethylester, Na-Salz enthaltend 19,6 % « Di-Salz » der unveresterten Säure, 38,2 Gew.-%ig in Wasser

e) $\alpha$-Sulfo-$C_{16}$/$C_{18}$-fettsäure, Di-Na-Salz, 28,0 Gew.-%ig in Wasser

f) $C_{12}$/$C_{16}$-Fettalkoholsulfat, Na-Salz 30 Gew.-%ig

g) Di-2-Ethylhexyl-sulfosuccinat, Na-Salz 71,5 Gew.-%ig

Beispiele I bis V der folgenden Tabellen I und II beschreiben die Erfindung ; Vergleichsbeispiele VI und VII die Herstellung von Hydrosolen nach dem Stand der Technik durch eine Kombination Alkylphenolethersulfat/Fettalkoholsulfat.

[1)] EO = Ethylenoxid

Vergleichsbeispiel VIII belegt die Eigenschaften der Emulgatorkombination Alkylphenolethersulfat/Dialkylsulfosuccinat, die Viskositätserniedrigung bleibt hinter der Wirkung der erfindungsgemäßen Emulgatorkombinationen zurück.

Zur Herstellung der Hydrosole wurden Wasser und Emulgatoren vorgelegt und die Lösung auf Reaktionstemperatur gebracht. Es wurden dann simultan die Monomeren und die Initiatorlösung zugetropft. Dabei wurde die Polymerisationstemperatur im Bereich zwischen 75 und 80 °C gehalten. Nachdem keine exotherme Reaktion mehr beobachtet wurde, wurde zur Nachpolymerisation bei 82-90 °C die restlichen 10 % der Initiatorlösung zudosiert. Die Ergebnisse sind in den Tabellen I und II zusammengefaßt.

(Siehe Tabellen I-II Seite 5 ff.)

4

Tabelle I

| | | | I | II | III | IV | V | VI | VII | VIII |
|---|---|---|---|---|---|---|---|---|---|---|
| a) | **Vorlage** | | | | | | | | | |
| | Wasser | (g) | 421,8 | 407,9 | 423,5 | 407,1 | 406,3 | 410,6 | 412,1 | 445,4 |
| | Emulgator I | | a | c | d | c+e 1:1 | e | f | f | g |
| | - Einsatzkon- zentration | (g) | 48,8 | 62,7 | 47,1 | 63,5 | 64,3 | 60,0 | 46,7 | 25,2 |
| | Emulgator II | | b | b | b | b | b | b | b | b |
| | - Einsatzkon- zentration | (g) | 29,4 | 29,4 | 29,4 | 29,4 | 29,4 | 29,4 | 41,2 | 29,4 |
| b) | **Monomerdosierung** | | | | | | | | | |
| | Styrol | (g) | 152,0 | 152,0 | 152,0 | 152,0 | 152,0 | 152,0 | 152,0 | 152,0 |
| | n-Butylacrylat | (g) | 114,0 | 114,0 | 114,0 | 114,0 | 114,0 | 114,0 | 114,0 | 114,0 |
| | 2-Ethylhexylacrylat | (g) | 114,0 | 114,0 | 114,0 | 114,0 | 114,0 | 114,0 | 114,0 | 114,0 |
| | Methacrylsäure | (g) | 20,0 | 20,0 | 20,0 | 20,0 | 20,0 | 20,0 | 20,0 | 20,0 |
| c) | **Initiatordosierung** | | | | | | | | | |
| | Wasser | (g) | 97,6 | 97,6 | 97,6 | 97,6 | 97,6 | 97,6 | 97,6 | 97,6 |
| | Ammoniumperoxo- disulfat | (g) | 2,4 | 2,4 | 2,4 | 2,4 | 2,4 | 2,4 | 2,4 | 2,4 |

Verfahren — Monomerdosierung —

Polymerisationstemp. — 75 - 80°C —

Nachpolymerisation — 82 - 90°C, 1 Stunde unter Zugabe von 10 % Rest der Initiatordosierung c nach Ende der Monomer- dosierung

0 155 450

Tabelle II

**Eigenschaften der Polymerdispersionen**

| Rezeptur | | I | II | III | IV | V | VI | VII | VIII |
|---|---|---|---|---|---|---|---|---|---|
| Koagulatge-<br>halte | (%) | < 0,01 | < 0,01 | < 0,01 | < 0,01 | < 0,01 | - | - | 0,1 |
| Rührer-,<br>Wandbelag | (%) | 0,1 | - | - | 0,2 | 0,1 | - | - | 0,3 |
| Trockenrück-<br>stand | (%) | 43,3 | 42,6 | 43,4 | 42,7 | 43,0 | 42,3 | 42,9 | 43,1 |
| Brookfield-<br>Viskosität | (mPa.s) | 3000 | 502 | 644 | 330 | 170 | 17300 | 16000 | 6400 |
| Oberflächen-<br>spannung | (mN/m) | 51,4 | 46,2 | 46,5 | 45,1 | 40,7 | n.b. | n.b. | 56,2 |
| Teilchen-<br>größe | (/um) | 0,033 | 0,052 | 0,053 | 0,033 | 0,032 | 0,049 | 0,048 | 0,030 |

n.b. = nicht bestimmbar wegen zu hoher Viskosität

0 155 450

**Patentansprüche**

1. Verfahren zur Herstellung von Acrylat-Hydrosolen durch Polymerisation von

30 bis 99 Gewichtsprozent (Meth)acrylsäureestern von $C_1$ bis $C_8$ Alkoholen
0,5 bis 7 Gewichtsprozent ethylenisch ungesättigten Säuren und/oder deren Amiden und
0 bis 70 Gewichtsprozent Monomeren aus der Gruppe Styrol, Methylstyrol, Acrylnitril, Vinylacetat, und/oder Vinylchlorid

in wäßriger Emulsion in Gegenwart von üblichen radikalischen Initiatoren, Reglern, sonstigen Hilfsstoffen und Alkylphenolethersulfaten als Emulgatoren,
dadurch gekennzeichnet, daß also Co-Emulgator ein α-Sulfocarbonsäurealkylester mit bis 24 C-Atomen im Carbonsäureteil und 1 bis 4 C-Atomen im Alkoholrest und seine α-Sulfocarbonsäure, beide gewünschtenfalls in Salzform, eingesetzt werden.

2. Verfahren nach Anspruch 1, dadurch gekennzeichnet, daß eine α-Sulfocarbonsäure und ihre -ester mit 12 bis 18 C-Atomen im Fettsäureteil und bis zu 4 C-Atomen im Alkoholrest eingesetzt werden.

3. Verfahren nach den Ansprüchen 1 und 2, dadurch gekennzeichnet, daß als Alkylphenolethersulfat das Sulfat des Umsetzungsproduktes von einem mol Nonylphenol und/oder Octylphenol mit 4 bis 30, vorzugsweise 8 bis 12 mol Ethylenoxid eingesetzt wird.

4. Verfahren nach den Ansprüchen 1 bis 3, dadurch gekennzeichnet, daß der α-Sulfocarbonsäureester in Mengen von 1 bis 7, vorzugsweise 1,5 bis 5 Gewichtsprozent, bezogen auf Gesamthydrosol, eingesetzt werden.

5. Verfahren nach den Ansprüchen 1 bis 4, dadurch gekennzeichnet, daß man den Gesamtfeststoffgehalt der Hydrosole auf über 40 Gewichtsprozent einstellt.

6. Verfahren nach den Ansprüchen 1 bis 5, dadurch gekennzeichnet, daß als (Meth)acrylsäureester die Methyl-, Ethyl-, Butyl- und/oder 2-Ethylenhexylester eingesetzt werden.

7. Verfahren nach den Ansprüchen 1 bis 6, dadurch gekennzeichnet, daß als ungesättigte Säuren Acrylsäure, Methylacrylsäure, Itaconsäure, Crotonsäure, Maleinsäure, Fumarsäure, die Halbester der genannten Dicarbonsäuren mit $C_1$ bis $C_5$ Alkoholen, Vinylsulfonsäure, 2-Acrylamido-2-methylpropansulfonsäure und/oder die Schwefelsäuremonoester des 2-Hydroxyethyl-(meth)-acrylats eingesetzt werden.

8. Verfahren nach den Ansprüchen 1-7, dadurch gekennzeichnet, daß nach der Monomerzulaufmethode gearbeitet wird.

**Claims**

1. A process for the production of acrylate hydrosols by polymerization of

30 to 99 % by weight (meth)acrylates of $C_1$-$C_8$ alcohols
0.5 to 7 % by weight ethylenically unsaturated acids and/or amides thereof and
0 to 70 % by weight monomers from the group comprising styrene, methyl styrene, acrylonitrile, vinyl acetate and/or vinyl chloride

in aqueous emulsion in the presence of standard radical initiators, regulators, other auxiliaries and alkyl phenol ether sulfates as emulsifiers,
characterized in that an α-sulfocarboxylic acid alkyl ester containing up to 24 C-atoms in the carboxylic acid part and 1 to 4 C-atoms in the alcohol radical and its α-sulfocarboxylic acid, both if desired in salt form, are used as co-emulsifier.

2. A process as claimed in Claim 1, characterized in that an α-sulfocarboxylic acid and -esters thereof containing 12 to 18 C-atoms in the fatty acid part and up to 4 C-atoms in the alcohol radical are used.

3. A process as claimed in Claims 1 and 2, characterized in that the sulfate of the reaction product of one mole nonylphenol and/or octylphenol with 4 to 30 and preferably 8 to 12 moles ethylene oxide is used as the alkyl phenol ether sulfate.

4. A process as claimed in Claims 1 to 3, characterized in that the α-sulfocarboxylic acid ester is used in quantities of 1 to 7 and preferably 1.5 to 5 % by weight, based on total hydrosol.

5. A process as claimed in Claims 1 to 4, characterized in that the total solids content of the hydrosols is adjusted to more than 40 % by weight.

6. A process as claimed in Claims 1 to 5, characterized in that the methyl, ethyl, butyl and/or 2-ethylene hexyl esters are used as the (meth)acrylic acid esters.

7. A process as claimed in Claims 1 to 6, characterized in that the unsaturated acids used are acrylic acid, methacrylic acid, itaconic acid, crotonic acid, maleic acid, fumaric acid, the semiesters of the dicarboxylic acids mentioned with $C_1$-$C_5$ alcohols, vinyl sulfonic acid, 2-acrylamido-2-methylpropane sulfonic acid and/or the sulfuric acid monoesters of 2-hydroxyethyl (meth)acrylate.

8. A process as claimed in Claims 1 to 7, characterized in that it is carried out by the monomer feed method.

**Revendications**

1. Procédé pour l'obtention d'hydrosols d'acrylates par polymérisation de :

30 à 99 % en poids d'esters d'acide (Meth) acrylique avec des alcools en $C_1$-$C_8$,
0,5 à .7 % en poids d'acides éthyléniques non saturés et/ou de leurs amides et,
0 à 70 % en poids de monomères choisis dans le groupe

du styrène, de méthylstyrène, du nitrile acrylique, de l'acétate de vinyle et/ou du chlorure de vinyle en émulsion dans l'eau en présence des initiateurs radicaliques habituels, des régulateurs, d'autres substances auxiliaires et des sulfates d'éther d'alcoylphénols comme agents émulsionnants, caractérisé en ce que l'on met en œuvre en tant que co-émulsionnant un ester d'alcoyle d'acide α-sulfocarboxylique ayant jusqu'à 24 atomes de carbone dans la partie carboxylique et de 1 à 4 atomes de carbone dans le reste alcoyle et l'acide α-sulfo-carboxylique, tous deux, si désiré, sous la forme de sels.

2. Procédé selon la revendication 1, caractérisé en ce que l'on met en œuvre un acide α-sulfocarboxylique et son ester ayant de 12 à 18 atomes de carbone dans la partie acide gras et jusqu'à 4 atomes de carbone dans la fraction ester.

3. Procédé selon les revendications 1 et 2, caractérisé en ce que comme sulfate d'éther d'alcoylphénol, on met en œuvre le sulfate du produit de condensation d'une mol. de nonylphénol et/ou d'octylphénol avec 4 à 30, de préférence 8 à 12 mol — d'oxyde d'éthylène.

4. Procédé selon les revendications 1 à 3, caractérisé en ce que l'ester d'acide α-sulfo-carboxylique est mis en œuvre en quantités de 1 à 7, de préférence de 1,5 à 5 % en poids, rapporté à l'hydrosol total.

5. Procédé selon les revendications 1 à 4, caractérisé en ce que l'on place la teneur totale en substances solides des hydrosols au-dessus de 40 % en poids.

6. Procédé selon les revendications 1 à 5, caractérisé en ce que l'on met en œuvre en tant qu'ester de l'acide (Meth) acrylique, l'ester méthylique, éthylique, butylique, et/ou 2-éthylènehexylique.

7. Procédé selon les revendications 1 à 6, caractérisé en ce que l'on met en œuvre en tant qu'acide non saturé, l'acide acrylique, l'acide méthacrylique, l'acide itaconique, l'acide crotonique, l'acide maléique, l'acide fumarique, les hémi-esters des acides dicarboxyliques susnommés avec des alcools en $C_1$-$C_5$, l'acide vinylsulfonique, l'acide 2-acrylamido-2-méthylpropane sulfonique et/ou le monoester sulfurique de (Meth) acrylate de (2-hydroxyéthyle).

8. Procédé selon les revendications 1 à 7, caractérisé en ce que l'on opère selon la méthode de convergence du monomère.